# FASCICULE DE BREVET EUROPEEN

(11) **EP 2 447 495 B1**
(45) Date de publication et mention de la délivrance du brevet: **31.12.2014**
(21) Numéro de dépôt: 11185108.5
(22) Date de dépôt: 13.10.2011
(51) Int. Cl.: F01N 9/00, F01N 3/20

(54) **Procédé de contrôle d'un système de réduction catalytique sélective pour un véhicule et véhicule correspondant**
Steuerungsverfahren eines Systems mit selektiver katalytischer Reduktion für ein Fahrzeug, und entsprechendes Fahrzeug
Method for controlling a selective catalytic reduction system for a vehicle and corresponding vehicle

(30) Priorité: 02.11.2010 FR 1059007
(43) Date de publication de la demande: 02.05.2012
(73) Titulaire: PSA Peugeot Citroen Automobiles S.A., 78140 Velizy Villacoublay (FR)
(72) Inventeur: Saby, Marie-Pierre, 78990 ELANCOURT (FR); Lee, Eric, 94100 SAINT MAUR DES FOSSES (FR)

(56) Documents cités:
- EP-A1- 2 166 208
- DE-A1-102007 000 538
- DE-A1-102008 001 948
- JP-A- 2004 293 494

## Description

L'invention se rapporte à un procédé de contrôle d'un système de réduction catalytique sélective pour véhicule. L'invention concerne également un véhicule comprenant un système de réduction catalytique sélective apte à mettre en oeuvre le procédé selon l'invention.

Dans un contexte de dépollution des gaz d'échappement d'un moteur diesel, les systèmes de réduction catalytique sélective (ou SCR pour « Sélective Catalyst Réduction » en anglais) ont pour but de réduire les oxydes d'azote (NOₓ) contenus dans les gaz d'échappement. Le système SCR utilise une réaction chimique entre ces mêmes NOₓ et un réducteur. Classiquement le réducteur est de l'ammoniac (NH₃). L'ammoniac est injecté à la ligne d'échappement des gaz. L'injection de l'ammoniac peut être réalisée par l'intermédiaire d'une autre espèce chimique telle que l'urée.

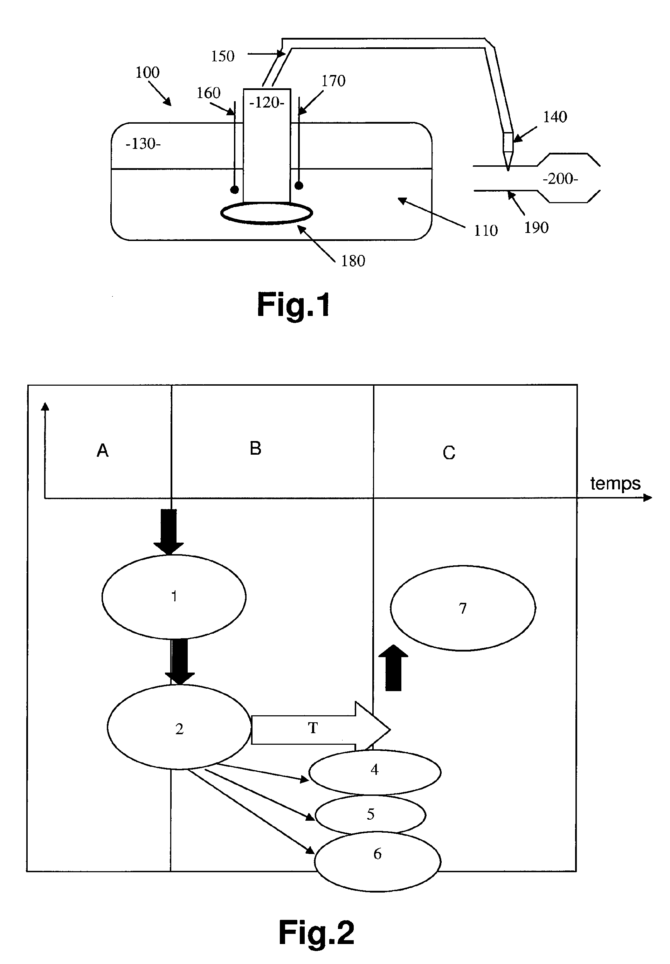

Les systèmes actuels de dépollution demandent un système SCR pouvant amener le réducteur au niveau de l'injecteur dans des conditions adéquates d'injection. Un exemple de système SCR est présenté en figure 1. Le système SCR 100 est composé d'un ou plusieurs réservoirs 130 pour stocker le réducteur 110, d'une pompe 120, d'une ou plusieurs lignes ou canalisations 150 et d'un injecteur 140. La canalisation 150 peut être chauffante. Les réservoirs 130 comprennent également une jauge 160, un capteur de température 170 et au moins un élément de chauffe 180. La canalisation 150 permet d'amener le réducteur 110 dans la ligne d'échappement 190 du véhicule. Le réducteur 110 injecté dans la ligne d'échappement 190 subit ensuite des réactions chimiques dans le catalyseur SCR 200.

Les injections de réducteur 110 dans la ligne d'échappement 190 sont réalisées dans certaines phases de vie du véhicule pour la dépollution des gaz d'échappement ou pour la protection thermique de l'injecteur 140. En cas d'absence de débit de gaz d'échappement dans la ligne 190, toute injection de réducteur 110 entraînerait un encrassement de la ligne 190. L'injecteur 140 est donc fermé en cas d'arrêt du moteur thermique.

On connaît comme réducteur l'adblue (marque déposée) qui est composé d'urée diluée à 30% dans de l'eau.

Le réducteur peut geler dans des conditions de très basses températures et lorsque le moteur thermique est arrêté. Les composants principaux du système SCR 100 ne résistent pas tous au gel du réducteur 110. D'où la nécessité de purger le circuit du système SCR 100. Typiquement, une telle purge est réalisée en faisant tourner la pompe 120 en mode inverse. Le réducteur 110 est alors ramené dans le réservoir 130.

D'autre part, afin de pouvoir injecter au mieux, la pompe 120 envoie en amont de l'injecteur 140 du réducteur 110 sous pression et sous forme liquide. La phase liquide du réducteur 110 permet une meilleure injection dans la ligne d'échappement 190.

Dans un contexte de minimisation du coût de fonctionnement d'un véhicule, il est recherché d'économiser la consommation d'énergie de la pompe 120.

Le document EP-A-2166208 propose de supprimer un fonctionnement inutile de la pompe dans un véhicule comprenant un dispositif d'arrêt et de redémarrage automatique du moteur thermique, encore appelé dispositif STT (pour « STop and sTart » en anglais). Le document propose un procédé qui empêche la purge du réducteur dans le cas d'un arrêt temporaire du moteur dû au dispositif STT. Il n'est pas nécessaire de procéder à la purge puisque le moteur va redémarrer dans un laps de temps court. Ainsi, la pompe n'est pas activée inutilement et l'énergie est économisée. Cependant, pendant un arrêt temporaire du moteur, la pompe reste active pour permettre une injection dans de bonnes conditions lors du redémarrage du moteur. En particulier, la pression est maintenue pour éviter une phase vapeur du réducteur au niveau de l'injecteur. Le document ne décrit pas comment minimiser la consommation d'énergie de la pompe pendant un arrêt temporaire.

Le document US-A-2008/0087008 présente un procédé de contrôle de la pompe à partir de données provenant du fonctionnement du véhicule. Cependant, le document ne décrit pas comment économiser l'énergie fournie à la pompe lors d'un arrêt temporaire du moteur.

Le document DE-A-102007000538 décrit un procédé de purge d'un système SCR, mais ne décrit pas un procédé permettant d'économiser l'énergie fournie à la pompe lors d'un arrêt temporaire du moteur.

Il existe donc un besoin pour un procédé de contrôle d'un système SCR permettant de minimiser la consommation de la pompe lors d'un arrêt temporaire du véhicule.

Pour cela, l'invention propose un procédé de contrôle d'un système de réduction catalytique sélective pour un véhicule,
le système de réduction catalytique sélective comprenant une pompe de réducteur, un injecteur de réducteur dans une ligne d'échappement du véhicule, et une canalisation reliant l'injecteur à la pompe,
caractérisé en ce que le procédé comprend une étape consistant à :
- sélectionner un état de fonctionnement de la pompe en fonction de
la proximité de l'état de phase du réducteur avec un état vapeur, en une zone prédéterminée du système de réduction catalytique sélective,
et de la détection d'un arrêt du véhicule.

Selon une variante, si le réducteur est à un état de phase proche de la phase vapeur, la pompe est maintenue en pression.

Selon une variante, si le réducteur est à un état de phase éloigné de la phase vapeur et la pompe est de type étanche, la pompe est désactivée.

Selon une variante, si le réducteur est à un état de phase éloigné de la phase vapeur et la pompe est de type non étanche, la pompe est maintenue en pression de sorte que la pression au niveau de la zone prédéterminée soit supérieure à un seuil de vaporisation du réducteur.

Selon une variante, la proximité de l'état de phase avec un état vapeur est déterminée par une comparaison de la pression et de la température de ladite zone prédéterminée avec des seuils de pression et de température respectifs.

Selon une variante, la température est déterminée à partir d'un capteur localisé au niveau de l'échappement du véhicule et à partir d'une modélisation de la température au niveau de la zone prédéterminée.

Selon une variante, la température est déterminée avec un capteur de température localisé au niveau de la zone prédéterminée.

Selon une variante, la pression est déterminée selon l'une des manières suivantes :
- avec un capteur de pression localisé au niveau de la canalisation et à partir d'une modélisation de la pression au niveau de la zone prédéterminée ;
- à partir d'une estimation de la pression en sortie de la pompe et à partir d'une modélisation de la pression au niveau de la zone prédéterminée ; ou
- avec un capteur de pression au niveau de la zone prédéterminée.

Selon une variante, la zone prédéterminée correspond à l'injecteur.

Selon une variante, la température est déterminée à partir du courant consommé par l'injecteur.

L'invention concerne également un véhicule comprenant une ligne d'échappement et un système de réduction catalytique sélective ayant une pompe de réducteur, un injecteur de réducteur dans une ligne d'échappement du véhicule, et une canalisation reliant l'injecteur à la pompe,
caractérisé en ce que le système comprend une unité de commande apte à mettre en oeuvre le procédé selon l'invention.

Selon une variante, le véhicule comprend en outre un dispositif d'arrêt et de redémarrage automatique d'un moteur thermique du véhicule.

Selon une variante, le véhicule est un véhicule hybride.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un exemple de système de réduction catalytique décrit précédemment ;
- figure 2, un organigramme présentant un exemple de procédé selon l'invention.

Le procédé de contrôle selon l'invention sera mieux compris en faisant référence à la figure 1 déjà décrite et à la figure 2. La figure 2 présente les étapes d'un exemple de procédé selon l'invention au cours du temps et suivant les états A, B, C d'un moteur thermique d'un véhicule dans lequel le procédé est mis en oeuvre.

Le procédé de contrôle selon l'invention est mis en oeuvre dans un système de réduction catalytique sélective adapté pour injecter du réducteur dans une ligne d'échappement d'un véhicule. La figure 1 présente un exemple de système SCR 100. Le système SCR 100 comprend une pompe 120 pour amener du réducteur 110 dans une canalisation 150 à partir d'un réservoir 130 de réducteur. Le système SCR 100 comprend également un injecteur 140 de réducteur dans la ligne d'échappement 190 du véhicule. La canalisation 150 achemine le réducteur 110 dans l'injecteur 140.

Le procédé de contrôle selon l'invention comprend la sélection d'un état de fonctionnement 4, 5, 6 de la pompe 120 en fonction de la détection d'un arrêt du véhicule. Autrement dit, l'état de fonctionnement 4, 5, 6 de la pompe 120 est fonction d'une étape 1 de détection d'un arrêt du moteur thermique du véhicule.

L'arrêt du moteur thermique est temporaire. Par exemple, lorsque le véhicule comprend un dispositif d'arrêt et de redémarrage automatique d'un moteur thermique ou dispositif STT, l'arrêt correspond à un arrêt automatique du moteur thermique (ou stop STT). Autrement dit, dans cet exemple, la sélection d'un état de fonctionnement de la pompe 120 est fonction d'une étape 1 de détection d'un passage d'un état de roulage normal A du moteur thermique à un état B où le moteur est arrêté sous l'effet du dispositif STT.

Dans un autre exemple, le véhicule est hybride, tel qu'un véhicule hybride thermique/électrique. L'arrêt du moteur thermique correspond alors à un arrêt temporaire pour un entraînement du véhicule par le moteur électrique.

La sélection d'un état de fonctionnement de la pompe 120 est en outre fonction de la proximité de l'état de phase du réducteur 110 avec un état vapeur dans une zone prédéterminée du système SCR 100. La zone prédéterminée présente un risque d'évaporation du réducteur 110. En particulier, la sélection est fonction d'une étape 2 de détection d'un risque de vaporisation du réducteur 110. Autrement dit, la sélection est fonction d'une étape 2 de détection d'un risque de passage du réducteur 110 de l'état liquide à l'état vapeur au niveau de la zone prédéterminée. L'état de phase du réducteur 110 dans la zone prédéterminée est important pour assurer une injection du réducteur 110 dans la ligne d'échappement 190.

Par exemple, la zone prédéterminée correspond à l'injecteur 140. Dans un autre exemple, la zone prédéterminée correspond à une autre partie du système hydraulique acheminant le réducteur 110. Par exemple, la zone prédéterminée correspond à une portion de la canalisation 150 proche du moteur thermique du véhicule.

Typiquement, lors d'un arrêt temporaire du moteur thermique, la ligne d'échappement 190 ne présente plus de gaz d'échappement. L'injecteur 140 est fermé pour éviter tout encrassement de la ligne 190. Dans l'art antérieur, la pompe 120 est maintenue active pour maintenir une pression au niveau de l'injecteur 140 permettant de conserver un état liquide du réducteur 110. Ainsi, le réducteur 110 est prêt à être injecté dans la ligne d'échappement 190 lors du redémarrage du moteur.

Le procédé selon l'invention permet de contrôler l'acheminement du réducteur 110 dans les phases ou cycles du moteur où il n'y a pas de débit de gaz à l'échappement en raison d'un arrêt du moteur thermique. Dans le procédé selon l'invention, la dépendance de l'état de fonctionnement 4, 5, 6 de la pompe 120 avec la proximité de l'état de phase du réducteur 110 par rapport à un état vapeur permet de maîtriser la consommation de la pompe 120. Cependant on maintient un état de phase qui assure une injection dans la ligne d'échappement 190 au redémarrage.

Si, dans la zone prédéterminée, le réducteur 110 est à un état de phase proche de la phase vapeur, la pompe 120 est dans un état 4 de maintien de pression. Autrement dit si on détecte un risque de vaporisation du réducteur 110 dans la zone prédéterminée, on sélectionne un état 4 dans lequel la pompe est maintenue en pression afin de maintenir le réducteur 110 à son état liquide. En effet une diminution de la pression pourrait entraîner une vaporisation du réducteur 110. Par exemple, la pompe 120 est mise dans l'état 4 si un test de détection de risque de vaporisation du réducteur 110 est positif, c'est-à-dire indique un risque avéré d'évaporation.

Si, dans la zone prédéterminée, le réducteur 110 est à un état de phase éloigné de la phase vapeur et si la pompe 120 est de type étanche, on sélectionne un état 5 dans lequel la pompe 120 est coupée. La pompe 120 est dite étanche ou non passante si, lorsque la pompe 120 est coupée, la pression dans la canalisation 150 ne diminue pas ou sinon lentement. Dans l'état 5, la pompe 120 n'est plus alimentée par un courant électrique. Ainsi la canalisation 150 présente une pression permettant de maintenir la phase liquide du réducteur 110 dans la zone prédéterminée, tout en évitant une consommation électrique de la pompe 120. Par exemple, la pompe 120 est mise dans l'état 5 si la pompe est étanche et un test de détection de risque de vaporisation du réducteur 110 est négatif.

Si, dans la zone prédéterminée, le réducteur 110 est à un état de phase éloigné de la phase vapeur et la pompe 120 est de type non étanche, on sélectionne un état 6 dans lequel la pompe 120 est en mode de basse consommation. La pompe 120 est dite non étanche ou passante si, lorsque la pompe 120 est coupée, la pression dans la canalisation 150 diminue rapidement. Dans l'état 6, l'alimentation en courant électrique de la pompe 120 est diminuée. Cependant la pompe 120 est maintenue en pression. La pompe 120 est active au strict minimum pour que la pression dans la zone prédéterminée ne descende pas en dessous d'un seuil de vaporisation du réducteur 110. Le seuil de vaporisation désigne donc un seuil de pression. Une pression supérieure au seuil de vaporisation assure que le réducteur 110 reste à l'état liquide. Ainsi la canalisation 150 présente une pression permettant de maintenir la phase liquide du réducteur 110 dans la zone prédéterminée, tout en diminuant la consommation électrique de la pompe 120. Par exemple, la pompe 120 est mise dans l'état 6 si la pompe est non étanche et un test de détection de risque de vaporisation du réducteur 110 est négatif.

Dans un mode de réalisation, l'état de phase du réducteur 110 est déterminé à partir d'un abaque représentant l'état de phase du réducteur 110 en fonction de la pression et de la température. En particulier, la proximité de l'état de phase avec un état vapeur est déterminée par une comparaison de la pression du réducteur 110 dans la zone prédéterminée avec un seuil de pression. Le seuil de pression correspond au seuil de vaporisation du réducteur 110 dans la zone prédéterminée. L'état de phase est déterminé en outre par une comparaison de la température du réducteur 110 dans la zone prédéterminée avec un seuil de température. Une température inférieure au seuil de température assure que le réducteur 110 reste à l'état liquide dans la zone prédéterminée.

La température du réducteur 110 dans la zone prédéterminée est déterminée par tout moyen adapté.

Par exemple, on utilise un capteur de température localisé à l'échappement du véhicule. Le capteur peut être localisé en amont ou en aval d'un filtre à particule. Le capteur peut être localisé en amont ou en aval d'un catalyseur d'oxydation. On utilise ensuite une modélisation de la thermique de la ligne d'échappement 190 pour remonter jusqu'à la température de la zone prédéterminée.

Dans un autre exemple, on utilise un capteur de température placé dans la zone prédéterminée.

Dans un exemple où la zone prédéterminée correspond à l'injecteur 140, on utilise la recopie du courant consommé par l'injecteur 140 pour estimer la température de l'injecteur lui-même. Par recopie on entend le courant mesuré pendant le pilotage de l'injecteur 140, c'est-à-dire le courant circulant dans une bobine située dans l'injecteur 140. La valeur nominale du courant circulant dans la bobine varie en fonction de la température. Ainsi à partir du courant circulant dans la bobine, on estime la température de l'injecteur 140.

La pression du réducteur 110 dans la zone prédéterminée est déterminée par tout moyen adapté.

Dans un exemple, on utilise un capteur de pression placé dans la canalisation 150 pour modéliser la pression du réducteur 110 dans la zone prédéterminée.

Dans un autre exemple, on utilise une estimation de la pression en sortie de la pompe 120 pour modéliser la pression du réducteur 110 dans la zone prédéterminée. La pression en sortie de la pompe 120 est estimée par l'intermédiaire du courant consommé par la pompe 120.

Dans encore un autre exemple, on utilise un capteur de pression placé dans la zone prédéterminée.

Le réducteur 110 est par exemple de l'urée ou une solution aqueuse d'urée telle que l'adblue (marque déposée).

Dans un mode de réalisation, la sélection de l'état de fonctionnement 4, 5, 6 de la pompe 120 est mise en oeuvre tout le long d'un arrêt temporaire de durée T du moteur thermique du véhicule. Un tel arrêt temporaire est par exemple un stop STT. La sélection s'arrête à une étape 7 dans laquelle un retour au mode nominal est détecté, c'est-à-dire un passage du moteur de l'état B à un état C de redémarrage du moteur thermique. Un tel redémarrage est par exemple un redémarrage après un arrêt induit par un dispositif STT (ou « restart STT » en anglais).

Le procédé selon l'invention permet d'assurer la gestion des phases d'arrêt du moteur thermique, tout en évitant les surconsommations d'énergie de la batterie du véhicule liées à l'activité de la pompe 120. Le procédé selon l'invention est adapté à une utilisation dans un véhicule hybride (thermique/électrique ou autre) et/ou comprenant un dispositif Stop & Start. Le procédé selon l'invention permet donc de rendre compatible la gestion d'un système SCR et d'un dispositif Stop & Start et/ou électrique hybride. Ainsi le procédé permet de concilier un gain en émission de NOₓ par l'intermédiaire de l'injection, et un gain en émission de CO₂ par l'intermédiaire d'une baisse de la consommation.

Le procédé est particulièrement adapté aux architectures de système SCR nécessitant une purge du réducteur 110. En effet, dans ces architectures la pompe 120 permet une circulation du réducteur 110 du réservoir 130 vers la canalisation 150, mais aussi de la canalisation 150 vers le réservoir 130. Ainsi la pression dans la canalisation 150 ne peut être maintenue par un clapet anti-retour, mais par la pompe 120 elle-même. Ainsi lors d'un arrêt temporaire du véhicule la pompe est maintenue active pour permettre une pression au dessus du seuil de vaporisation dans la zone prédéterminée. Grâce au procédé selon l'invention, la consommation de la pompe est minimisée.

L'invention concerne également un véhicule qui comprend un système SCR 100 ayant une unité de commande apte à mettre en oeuvre le procédé selon l'invention. Le système SCR 100 comprend une pompe 120 pour amener du réducteur 110 dans une canalisation 150 à partir d'un réservoir 130 de réducteur. Le système SCR 100 comprend également un injecteur 140 de réducteur dans la ligne d'échappement 190 du véhicule. La canalisation 150 achemine le réducteur 110 dans l'injecteur 140.

Grâce au procédé selon l'invention, la consommation de la pompe 120 dans le véhicule est minimisée lors d'un arrêt temporaire d'un moteur thermique du véhicule.

Dans un mode particulier de réalisation, le véhicule comprend en outre un dispositif d'arrêt et de redémarrage automatique du moteur thermique. Dans ce mode de réalisation, le procédé est par exemple mis en oeuvre de la façon suivante.

Au moment de la détection de l'arrêt provoqué par le dispositif d'arrêt et de redémarrage automatique (ou stop STT), on entame un processus de détection du risque de vaporisation du réducteur 110 dans la zone prédéterminée. Cette détection est effectuée tout le long du stop STT à partir d'une analyse de la pression dans la canalisation 150 et de la température à l'échappement des gaz. Pour détecter le risque de vaporisation, on se base sur des seuils de pression et de température au niveau de la zone prédéterminée.

Dans un autre mode de réalisation, le véhicule est un véhicule hybride. Autrement dit le véhicule possède un entraînement par moteur thermique associé avec un autre mode d'entraînement. L'autre mode d'entraînement est par exemple un entraînement par moteur électrique. Dans cet exemple du véhicule selon l'invention, le procédé est mis en oeuvre lors d'un arrêt temporaire du moteur thermique pour un entraînement du véhicule par le moteur électrique.

Dans un mode de réalisation, le véhicule selon l'invention est hybride et comprend un dispositif d'arrêt et de redémarrage automatique.

L'invention n'est pas limitée aux exemples présentés. Ainsi l'invention n'est pas limitée aux véhicules comprenant un dispositif d'arrêt et de redémarrage automatique d'un moteur thermique. Le procédé selon l'invention peut être mis en oeuvre dans tout véhicule présentant un arrêt temporaire du moteur thermique. Notamment, la gestion d'un stop STT peut être transposée à la gestion du mode électrique sur un véhicule hybride thermique/électrique.

## Revendications

1. Procédé de contrôle d'un système de réduction catalytique sélective (100) pour un véhicule,
le système de réduction catalytique sélective (100) comprenant une pompe (120) de réducteur, un injecteur (140) de réducteur dans une ligne d'échappement (190) du véhicule, et une canalisation (150) reliant l'injecteur (140) à la pompe (120), **caractérisé en ce que** le procédé comprend une étape consistant à :
- sélectionner un état de fonctionnement de la pompe (120) en fonction de
la proximité de l'état de phase du réducteur (110) avec un état vapeur, en une zone prédéterminée du système de réduction catalytique sélective (100),
et de la détection d'un arrêt du véhicule.

2. Le procédé selon la revendication 1, **caractérisé en ce que** si le réducteur (110) est à un état de phase proche de la phase vapeur, la pompe (120) est maintenue en pression.

3. Le procédé selon la revendication 1 ou 2, **caractérisé en ce que** si le réducteur (110) est à un état de phase éloigné de la phase vapeur et la pompe (120) est de type étanche, la pompe (120) est désactivée.

4. Le procédé selon l'une des revendications 1 ou 2, **caractérisé en ce que** si le réducteur (110) est à un état de phase éloigné de la phase vapeur et la pompe (120) est de type non étanche, la pompe (120) est maintenue en pression de sorte que la pression au niveau de la zone prédéterminée soit supérieure à un seuil de vaporisation du réducteur (110).

5. Le procédé selon l'une des revendications 1 à 4, **caractérisé en ce que** la proximité de l'état de phase avec un état vapeur est déterminée par une comparaison de la pression et de la température de ladite zone prédéterminée avec des seuils de pression et de température respectifs.

6. Le procédé selon la revendication 5, **caractérisé en ce que** la température est déterminée à partir d'un capteur localisé au niveau de l'échappement du véhicule et à partir d'une modélisation de la température au niveau de la zone prédéterminée.

7. Le procédé selon la revendication 5, **caractérisé en ce que** la température est déterminée avec un capteur de température localisé au niveau de la zone prédéterminée.

8. Le procédé selon l'une des revendications 5 à 7, **caractérisé en ce que** la pression est déterminée selon l'une des manières suivantes :
- avec un capteur de pression localisé au niveau de la canalisation (150) et à partir d'une modélisation de la pression au niveau de la zone prédéterminée ;
- à partir d'une estimation de la pression en sortie de la pompe (120) et à partir d'une modélisation de la pression au niveau de la zone prédéterminée ; ou
- avec un capteur de pression au niveau de la zone prédéterminée.

9. Le procédé selon l'une des revendications 1 à 8, **caractérisé en ce que** la zone prédéterminée correspond à l'injecteur (140).

10. Le procédé selon la revendication 9, **caractérisé en ce que** la température est déterminée à partir du courant consommé par l'injecteur (140).

11. Véhicule comprenant une ligne d'échappement et un système de réduction catalytique sélective (100) ayant une pompe (120) de réducteur, un injecteur (140) de réducteur dans une ligne d'échappement (190) du véhicule, et une canalisation (150) reliant l'injecteur (140) à la pompe (120),
**caractérisé en ce que** le système (100) comprend une unité de commande apte à mettre en oeuvre le procédé selon l'une des revendications 1 à 10.

12. Véhicule selon la revendication 11, **caractérisé en ce qu'**il comprend en outre un dispositif d'arrêt et de redémarrage automatique d'un moteur thermique du véhicule.

13. Véhicule selon la revendication 11, **caractérisé en ce qu'**il est un véhicule hybride.

## Patentansprüche

1. Steuerungsverfahren eines Systems zur selektiven katalytischen Reduktion (100) für ein Fahrzeug,
wobei das selektive katalytische Reduktionssystem (100) eine Reduktionsmittelpumpe (120), einen Reduktionsmittelinjektor (140) in einen Auspuffstrang (190) des Fahrzeugs sowie eine Kanalisation (150) aufweist, die den Injektor (140) mit der Pumpe (120) verbindet, **dadurch gekennzeichnet, dass** das Verfahren einen Schritt aufweist, der aus Folgendem besteht:
- Auswählen eines Betriebszustands der Pumpe (120) in Abhängigkeit von der Nähe des Phasenzustands des Reduktionsmittels (110) zu einem Dampfzustand, in einer vorbestimmten Zone des selektiven katalytischen Reduktionssystems (100),
und dem Erfassen eines Stoppens des Fahrzeugs.

2. Verfahren nach Anspruch 1, **dadurch gekennzeichnet, dass**, falls das Reduktionsmittel (110) in einem Phasenzustand nahe der Dampfphase ist, die Pumpe (120) mit Druck beaufschlagt gehalten wird.

3. Verfahren nach Anspruch 1 und 2, **dadurch gekennzeichnet, dass**, wenn das Reduktionsmittel (110) in einem Phasenzustand ist, der von der Dampfphase entfernt ist, und die Pumpe (120) des dichten Typs ist, die Pumpe (120) deaktiviert wird.

4. Verfahren nach einem der Ansprüche 1 oder 2, **dadurch gekennzeichnet, dass**, falls das Reduktionsmittel (110) in einem Phasenzustand ist, der von der Dampfphase entfernt ist, und die Pumpe (120) des nicht dichten Typs ist, die Pumpe (120) derart mit Druck beaufschlagt gehalten wird, dass der Druck in dem Bereich der vorbestimmten Zone größer ist als ein Verdampfungsschwellenwert des Reduktionsmittels (110).

5. Verfahren nach einem der Ansprüche 1 bis 4, **dadurch gekennzeichnet, dass** die Nähe des Phasenzustands zu einem Dampfzustand durch einen Vergleich des Drucks und der Temperatur der vorbestimmten Zone mit jeweiligem Druck- und Temperaturschwellenwert bestimmt wird.

6. Verfahren nach Anspruch 5, **dadurch gekennzeichnet, dass** die Temperatur ausgehend von einem Fühler bestimmt wird, der sich im Bereich des Auspuffs des Fahrzeugs befindet, und ausgehend von einer Modellierung der Temperatur im Bereich der vorbestimmten Zone.

7. Verfahren nach Anspruch 5, **dadurch gekennzeichnet, dass** die Temperatur mit einem Temperaturfühler bestimmt wird, der sich im Bereich der vorbestimmten Zone befindet.

8. Verfahren nach einem der Ansprüche 5 bis 7, **dadurch gekennzeichnet, dass** der Druck gemäß einer der folgenden Arten bestimmt wird:
- mit einem Druckfühler, der sich im Bereich der Kanalisation (150) befindet und ausgehend von einer Modellierung des Drucks im Bereich der vorbestimmten Zone,
- ausgehend von einer Schätzung des Drucks am Ausgang der Pumpe (120) und ausgehend von einer Modellierung des Drucks auf dem Niveau der vorbestimmten Zone, oder
- mit einem Druckfühler im Bereich der vorbestimmten Zone.

9. Verfahren nach einem der Ansprüche 1 bis 8, **dadurch gekennzeichnet, dass** die vorbestimmte Zone dem Injektor (140) entspricht.

10. Verfahren nach Anspruch 9, **dadurch gekennzeichnet, dass** die Temperatur ausgehend von dem vom Injektor (140) verbrauchten Strom bestimmt wird.

11. Fahrzeug, das einen Auspuffstrang und ein selektives katalytisches Reduktionssystem (100) aufweist, das eine Reduktionsmittelpumpe (120), einen Reduktionsmittelinjektor (140) in einen Auspuffstrang (190) des Fahrzeugs sowie eine Kanalisation (150), die den Injektor (140) mit der Pumpe (120) verbindet, aufweist.

12. Fahrzeug nach Anspruch 11, **dadurch gekennzeichnet, dass** es ferner eine automatische Stopp- und Startvorrichtung eines Verbrennungsmotors des Fahrzeugs aufweist.

13. Fahrzeug nach Anspruch 11, **dadurch gekennzeichnet, dass** es ein Hybridfahrzeug ist.

## Claims

1. A method for controlling a selective catalytic reduction system (100) for a vehicle,
the selective catalytic reduction system (100) including a reducing agent pump (120), a reducing agent injector (140) in an exhaust line (190) of the vehicle, and a duct (150) connecting the injector (140) to the pump (120), **characterized in that** the method includes a step consisting of:
- selecting an operating state of the pump (120) as a function of
the proximity of the phase state of the reducing agent (110) with a vapour state, in a predetermined zone of the selective catalytic reduction system (100),
and of the detection of a shutdown of the vehicle.

2. The method according to claim 1, **characterized in that** if the reducing agent (110) is at a phase state close to the vapour phase, the pump (120) is maintained under pressure.

3. The method according to claim 1 or 2, **characterized in that** if the reducing agent (110) is at a phase state remote from the vapour phase and the pump (120) is of the sealed type, the pump (120) is deactivated.

4. The method according to one of claims 1 or 2, **characterized in that** if the reducing agent (110) is at a phase state remote from the vapour phase and the pump (120) is of the non-sealed type, the pump (120) is maintained under pressure such that the pressure at the level of the predetermined zone is greater than a vaporisation threshold of the reducing agent (110).

5. The method according to one of claims 1 to 4, **characterized in that** the proximity of the phase state with a vapour state is determined by a comparison of the pressure and of the temperature of the said predetermined zone with respective thresholds of pressure and temperature.

6. The method according to claim 5, **characterized in that** the temperature is determined from a sensor located at the level of the exhaust of the vehicle and from a modelling of the temperature at the level of the predetermined zone.

7. The method according to claim 5, **characterized in that** the temperature is determined with a temperature sensor located at the level of the predetermined zone.

8. The method according to one of claims 5 to 7, **characterized in that** the pressure is determined according to one of the following ways:
- with a pressure sensor located at the level of the duct (150) and from a modelling of the pressure at the level of the predetermined zone;
- from an estimation of the pressure at the outlet of the pump (120) and from a modelling of the pressure at the level of the predetermined zone; or
- with a pressure sensor at the level of the predetermined zone.

9. The method according to one of claims 1 to 8, **characterized in that** the predetermined zone corresponds to the injector (140).

10. The method according to claim 9, **characterized in that** the temperature is determined from the current consumed by the injector (140).

11. A vehicle including an exhaust line and a selective catalytic reduction system (100) having a reducing agent pump (120), a reducing agent injector (140) in an exhaust line (190) of the vehicle, and a duct (150) connecting the injector (140) to the pump (120),
**characterized in that** the system (100) includes a control unit able to implement the method according to one of claims 1 to 10.

12. The vehicle according to claim 11, **characterized in that** it further includes an automatic stop and restart device of a heat engine of the vehicle.

13. The vehicle according to claim 11, **characterized in that** it is a hybrid vehicle.
